# EUROPEAN PATENT APPLICATION

(11) **EP 3 533 652 A1**
(43) Date of publication of application: **04.09.2019**
(21) Application number: 17864247.6
(22) Date of filing: 31.10.2017
(51) Int. Cl.: B60K 26/02, B60K 31/00, G05G 1/30, G05G 1/60, G05G 5/03

(54) **VEHICULAR ACCELERATOR PEDAL DEVICE**

(30) Priority: 31.10.2016 JP 2016212438
(71) Applicant: Tayama, Shuichi, Tokyo 167-0031 (JP); Image Co., Ltd., Tokyo 162-0825 (JP)
(72) Inventor: TAYAMA, Shuichi, Tokyo 167-0031 (JP)
(74) Representative: Dr. Gassner & Partner mbB
(86) International application number: PCT/JP2017/039293
(87) International publication number: WO 2018/079820

(57) **Abstract**

Provided is a vehicular accelerator pedal device equipped with an accelerator pedal that serves as a footrest during automatic driving, to enable switching to manual driving without causing a feeling of strangeness for a driver upon releasing of the automatic driving. The accelerator pedal device (7) includes an accelerator pedal actuator (18) that moves the accelerator pedal (4) to a desired operation position, and an accelerator pedal operation amount sensor (17) that detects an operation amount of the accelerator pedal. Upon releasing the automatic driving with step-on operation of the accelerator pedal, an accelerator pedal control unit (26) obtains a step-on position of the accelerator pedal from the accelerator pedal operation amount sensor, calculates an operation position of the accelerator pedal corresponding to a throttle opening just before switching to the manual driving, and causes the accelerator pedal to be moved to the operation position by the accelerator pedal actuator.

## Description

### TECHNICAL FIELD

The present invention relates to a vehicular accelerator pedal device suitable for automatic driving and partially automatic driving of a vehicle such as an automobile.

### BACKGROUND ART

Recently, there have been developed and proposed a variety of technologies for automatic driving control for automatically driving a vehicle such as an automobile by controlling speed and steering of the vehicle without manual operation of a driver. Further, there has been developed partially automatic driving with which automatic driving can be performed under specific circumstances as being capable of being switched to manual driving by a driver under the rest of circumstances. For example, an adaptive cruise control (ACC) device for travelling at a constant speed while keeping an inter-vehicle distance against a vehicle ahead constant using a radar device mounted at a front part of the vehicle as a travel assistance system to assist safety driving of the vehicle has been in practical use. In the present specification described below, automatic driving includes such partially automatic driving unless otherwise specified.

There has been known a vehicular travel control device to reduce burden of a driver by causing an accelerator pedal to serve as a footrest with increased reaction force during automatic driving with which acceleration and the like of a vehicle are controlled (for example, see Patent Literature 1). According to the vehicular travel control device, a footrest position A of the accelerator pedal is varied during constant speed travelling with the ACC device so that relation between the footrest position A and vehicle speed corresponds to relation between a pedal stroke angle and vehicle speed during normal driving. Thus, feeling of strangeness for a driver with respect to accelerator pedal operation is eliminated during constant speed travelling.

Further, there has been proposed a vehicular travel control device that enables to adjust a stroke angle of an accelerator pedal serving as a footrest in accordance with individual variation of drivers (for example, see Patent Literature 2). According to the vehicular travel control device, the stroke angle of the accelerator pedal serving as a footrest is set to an angle assumed to cause less burden at a driver's ankle based on ergonomics.

In most cases, releasing of automatic driving is performed by a driver to step on with a tread force equal to or greater than a keeping force, that is, a reaction force of an accelerator pedal serving as a footrest. At that time, if the accelerator pedal is depressed more than the driver intended to for releasing the automatic driving or a footrest function of the accelerator pedal, there may be a fear to cause a feeling of insecurity for the driver. To solve such a problem, there has been proposed a vehicular travel control device to prevent rapid opening of a throttle valve with smoothing control on response characteristics of the throttle valve upon releasing automatic driving control (for example, see Patent Document 3).

### CITED LITERATURE

### PATENT LITERATURE

Patent Literature 1: Japanese Patent Application Laid-Open No. 2006-143119
Patent Literature 2: Japanese Patent Application Laid-Open No. 2006-132388
Patent Literature 3: Japanese Patent Application Laid-Open No. 2004-60484

### SUMMARY OF THE INVENTION

According to the related art described above, there is a fear to cause delay of the throttle opening with respect to operation of the accelerator pedal due to smoothing control on the throttle opening characteristics upon switching from an automatic driving mode to a manual driving mode. Accordingly, the driver feels insecurity caused by strangeness on that desired engine power is not obtained, resulting in a feeling of strangeness, and then, a feeling of insecurity.

In order to solve the abovementioned issues in the related art, an object of the present invention is to provide a vehicular accelerator pedal device including an accelerator pedal serving as a footrest during automatic driving and being capable of performing switching from automatic driving to manual driving without causing a feeling of strangeness for a driver upon releasing automatic driving.

The present invention provides a vehicular accelerator pedal device including an accelerator pedal, an accelerator pedal actuator configured to move the accelerator pedal to a desired operation position, and an accelerator pedal control unit configured to control the accelerator pedal actuator so that the accelerator pedal is moved, upon switching from automatic driving to manual driving, to an operation position corresponding to a throttle opening just before switching to the manual driving.

According to the above, owing to that the accelerator pedal is moved, upon switching from automatic driving to manual driving, to the operation position corresponding to the throttle opening just before switching to the manual driving, it is possible to perform switching from an automatic driving mode to a manual driving mode without causing a feeling of strangeness for a driver.

In another embodiment, there is further provided a reaction force applying unit configured to apply, during the automatic driving, an additional reaction force to the accelerator pedal in a direction opposite to a step-on direction to keep the accelerator pedal at a predetermined position. According to the above, the accelerator pedal can serve as a footrest during the automatic driving.

In another embodiment, during the automatic driving, the predetermined position of the accelerator pedal is set at a position on an opposite side to the step-on direction beyond a reference position without being stepped on with the manual driving. According to the above, it is possible to cause a driver to feel as being with the automatic driving based on the position of the accelerator pedal serving as a footrest.

In another embodiment, the automatic driving can be released by the accelerator pedal being stepped on against the additional reaction force from the predetermined position. According to the above, a driver can perform switching to the manual driving on self-judgment without feeling strangeness.

### BRIEF DESCRIPTION OF THE DRAWINGS

FIG. 1 is a schematic view illustrating pedal arrangement at a driver's seat in a vehicle in an embodiment of the present invention.
FIG. 2 is an explanatory view illustrating an accelerator pedal device viewing along line II-II in FIG. 1 and a control configuration thereof.
FIGs. 3A and 3B are explanatory views illustrating states of the accelerator pedal during automatic driving.
FIG. 4 is an explanatory view illustrating a release operation of automatic driving with the accelerator pedal.
FIGs. 5A and 5B are explanatory views illustrating an operation of the accelerator pedal right after releasing automatic driving.
FIG. 6 is a structural view illustrating an accelerator pedal and an accelerator pedal control unit in another embodiment.
FIGs. 7A and 7B are explanatory views illustrating states of the accelerator pedal in FIG. 6 during automatic driving.
FIG. 8 is a structural view illustrating an accelerator pedal and an accelerator pedal control unit in another embodiment.
FIGs. 9A and 9B are explanatory views illustrating states of the accelerator pedal in FIG. 8 during automatic driving.

### EMBODIMENTS OF THE INVENTION

In Japan, automation degree of automatic driving systems for vehicles such as automobiles is defined as being classified into four levels, from Level 1 to Level 4 ("strategic innovation program (SIP) automatic driving system research and development plan", November 13, 2014, Cabinet Office, Director-General for Policy Planning, Science Technology and Innovation Department). At Level 1, any of accelerating, steering, and braking is performed by an automobile. At Level 2, a plurality of operations among accelerating, steering, and braking is performed by an automobile and the abovementioned ACC device corresponds thereto. At Level 3, all of accelerating, steering, and braking are performed by an automobile while those are performed by a driver only in a case of emergency. At Level 4, all of accelerating, steering, and braking are performed by something other than a driver completely without involvement of the driver. In this specification, unless otherwise specified, the term of automatic driving is defined basically to represent automatic driving at Levels 1 to 3.

In the following, preferable embodiments of a vehicular accelerator pedal control device and a control method thereof according to the present invention will be described in detail with reference to attached drawings. In the attached drawings, the same or similar reference is given to the same or similar structural element.

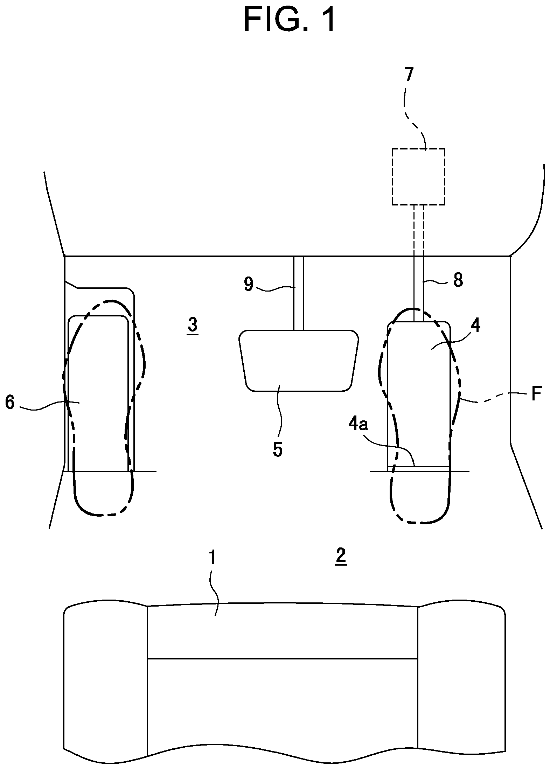

FIG. 1 schematically illustrates a front area of a cabin of a vehicle to which an accelerator pedal control device in an embodiment is applied. In the cabin front area, a floor panel 2 and a dash-panel 3 arising obliquely from a front end of the floor panel to define an engine room and the cabin are arranged in front of a driver's seat 1. The vehicle of the present embodiment is an automatic transmission (AT) vehicle. An accelerator pedal 4 being stepped on by the right foot of a driver and a brake pedal 5 on the inner side thereof in the vehicle width direction are arranged in parallel at a front lower area of the driver's seat 1. Further, a footrest 6 on which the left foot of the driver is placed is arranged on the left side of the brake pedal 5.

In the present embodiment, the accelerator pedal 4 is a so-called organ type having an approximately rectangular plate shape elongated in the vehicle front-rear direction with a lower end 4a thereof attached on the floor panel 2 as being swingable in the vehicle front-rear direction. A lower end of an accelerator arm 8 extending toward the vehicle rear side from the accelerator pedal device 7 in an engine room is attached to a back face (a face on the vehicle front side) of the accelerator pedal 4. As described later, a step-on operation of the accelerator pedal 4 is transmitted to the accelerator pedal device 7 via the accelerator arm 8.

The brake pedal 5 is a so-called suspended type suspended from the dash-panel 3 as being swingable in the vehicle front-rear direction. A lower end of a brake arm 9 extending into the cabin from the engine room side via the dash-panel 3 is attached to a back face of the brake pedal 5.

The present invention can be applied as well to a manual transmission (MT) vehicle. In such a case, a clutch pedal (not shown) is arranged between the brake pedal 5 and the footrest 6.

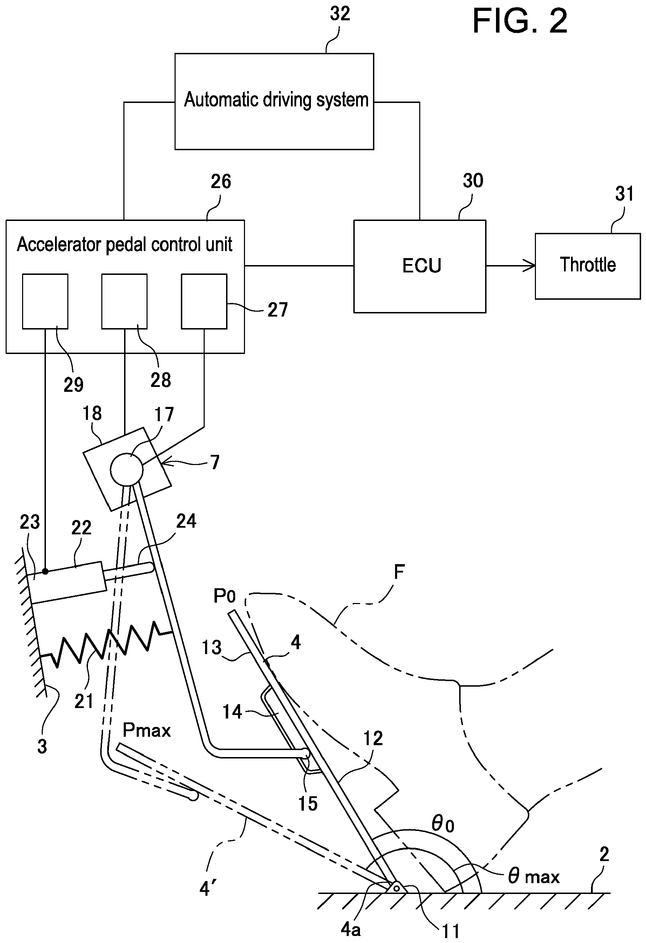

As illustrated in FIG. 2, the accelerator pedal 4 obliquely extends toward the front-upper side from a hinge portion 11 axially supporting the lower end 4a as a fulcrum point for swinging. A front face 12 of the accelerator pedal 4, that is, a face on the side of the driver's seat 1, serves as a step-on face on which the right foot F of a driver steps for a step-on operation. A guide slot 14 extending by a predetermined length along the longitudinal direction of a back face 13 of the accelerator pedal 4 is arranged on the back face 13. A horizontal rod 15 arranged at a lower end of the accelerator arm 8 is fitted to the guide slot 14 as being slidable in the guide slot 14 in a direction of extension thereof.

A base end part, that is, an upper end part, of the accelerator arm 8 is attached to the accelerator pedal device 7 as being rotatable. The accelerator pedal device 7 is provided with an accelerator pedal operation amount sensor 17 for detecting a rotation amount of the accelerator arm 8 as an operation amount of the accelerator pedal 4. Further, the accelerator pedal device 7 is provided with an accelerator pedal actuator 18 being, for example, an electric motor for rotating the accelerator arm 8 in the vehicle front-rear direction to a desired angle position with the base end part being as the rotation center.

A first reaction force applying unit 21 and a second reaction force applying unit 22 are arranged at the accelerator arm 8 between the accelerator arm 8 and the dash-panel 3 or another vehicle body portion. The first reaction force applying unit 21 generates a specific normal reaction force with respect to a step-on operation on the accelerator pedal 4 by the driver during manual driving without utilizing automatic driving. The first reaction force applying unit 21 has a known mechanism such as a spring urging the accelerator arm 8 in a direction opposite to the step-on direction of the accelerator pedal 4.

The second reaction force applying unit 22 generates an additional reaction force to be added to the normal reaction force during automatic driving. The additional reaction force is set so that the accelerator pedal 4 cannot be further pressed downward during automatic driving even if the driver places the foot thereof on the accelerator pedal 4 unless a tread force at a certain level or larger is not applied. The second reaction force applying unit 22 includes an operation rod 24 capable of extending and contracting, for example, with air pressure or an electromagnetic actuator from a main body portion 23 toward the accelerator arm 8. Owing to that the extended operation rod 24 pushes, at a leading end thereof, the accelerator arm 8 in a direction opposite to the step-on direction of the accelerator pedal 4, the additional reaction force can be applied to the accelerator pedal 4. In another embodiment, the additional reaction force can be generated by applying a rotational torque, with an electric motor, to a rotation shaft at the base end of the accelerator arm 8.

The accelerator pedal device 7 is connected to an accelerator pedal control unit 26 so that operations thereof are controlled thereby. The accelerator pedal control unit 26 includes an accelerator pedal operation amount detecting portion 27, an accelerator pedal actuator control portion 28, and an additional reaction force control portion 29. The accelerator pedal operation amount detecting portion 27 is connected to the accelerator pedal operation amount sensor 17 and continuously detects a rotation amount of the accelerator arm 8. The accelerator pedal actuator control portion 28 is connected to the accelerator pedal actuator 18 and controls driving thereof. The additional reaction force control portion 29 is connected to the second reaction force applying unit 22 and controls driving thereof.

The accelerator pedal control unit 26 is connected to an engine control unit (ECU) 30 that controls driving of an engine of the vehicle. The engine control unit 30 controls an electronic control throttle 31 during manual driving in accordance with an operation amount of the accelerator pedal 4 (a rotation amount of the accelerator arm 8) transmitted in real time from the accelerator pedal control unit 26. The accelerator pedal control unit 26 and the engine control unit 30 are connected to an automatic driving system 32 of the vehicle. During automatic driving, the engine control unit 30 controls the electronic control throttle 31 based on instructions of the automatic driving system 32.

The automatic driving system 32 includes an automatic driving control portion that includes a CPU for performing automatic driving of the vehicle by executing predetermined programs stored in advance. Further, the automatic driving system 32 includes a driving mode switching control portion that controls switching between a manual driving mode and an automatic driving mode. As described later, in the present embodiment, the automatic driving mode can be released with an intentional operation of the accelerator pedal 4 by the driver and switched to the manual driving mode. Here, the automatic driving mode represents automatic driving at Level 2 and Level 3 described above.

In FIG. 2, the accelerator pedal 4 indicated by solid lines is at a reference position P0 without being stepped on at all (the accelerator pedal operation amount = 0). Here, an angle between the step-on face 12 of the accelerator pedal 4 and a floor face 34 is denoted by θ0 (θ0>90°). Further, in FIG. 2, the accelerator pedal 4' indicated by dotted lines is at a full-open position Pmax with being fully stepped on to the limit. Here, an angle between the step-on face 12' of the accelerator pedal 4' and the floor face 34 is denoted by θmax (180°>θmax>θ0). During manual driving, the accelerator pedal 4 swings between the reference position P0 and the full-open position Pmax in accordance with the step-on amount by the driver.

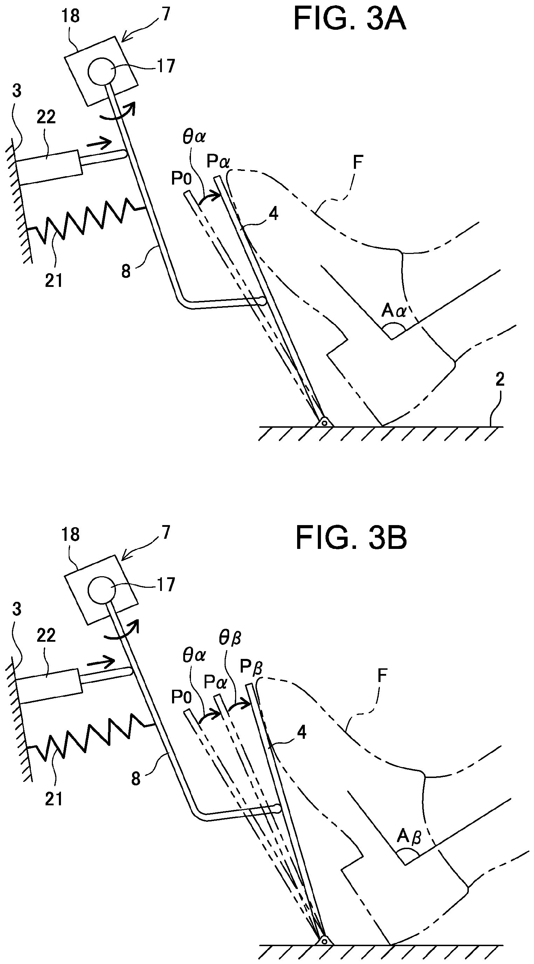

During automatic driving, the accelerator pedal 4 is swingable stepwise beyond the reference position P0 in a direction opposite to the step-on direction. In the present embodiment, the accelerator pedal 4 is set to swing in two steps to a first swing position Pα illustrated by solid lines in FIG. 3A and a second swing position Pβ illustrated by solid lines in FIG. 3B. Here, a swing angle from the reference position P0 to the first swing position Pα is denoted by θα and a swing angle from the first swing position Pα to the second swing position Pβ is denoted by θβ.

The first and second swing positions Pα and Pβ can be set in accordance with a travelling speed of the vehicle with automatic driving. For example, the first swing position Pα is set for a case that the vehicle travels at a low speed or a middle speed and the second swing position Pβ is set for a case that the vehicle travels at a high speed. Further, when the vehicle with automatic driving accelerates or decelerates relatively rapidly, it is possible to change from the first swing position Pα to the second swing position Pβ.

A swing operation of the accelerator pedal 4 is performed by causing the accelerator arm 8 to swing by extending the operation rod 24 of the second reaction force applying unit 22. When the accelerator pedal control unit 26 is notified of starting automatic driving by the automatic driving system 32 via the driving mode switching control portion, the accelerator pedal control unit 26 causes the second reaction force applying unit 22 to operate. The extending operation and an extension amount of the operation rod 24 is controlled by the additional reaction force control portion 29 of the accelerator pedal control unit 26.

The second reaction force applying unit 22 is controlled so that the operation rod 24 is maintained at the extension positions in FIGs. 3A and 3B. Thus, the additional reaction force working in a direction opposite to the step-on direction can be applied to the accelerator pedal 4. As a result, the accelerator pedal 4 can be used as a footrest for the right foot of the driver at the first swing position Pα in FIG. 3A and the second swing position Pβ in FIG. 3B.

The swing angle θα at the first swing position Pα and the swing angle θβ at the second swing position Pβ are set so that the driver whose right foot F is placed on the accelerator pedal 4 serving as a footrest can feel positional change respectively from the reference position P0 and the first swing position Pα of the accelerator pedal 4. As illustrated in FIGs. 3A and 3B, angles Aα, Aβ at the ankle of the right foot F of the driver are slightly smaller than an angle A0 with the right foot placed on the accelerator pedal 4 at the reference position P0. Here, the ankle angle A0 at the reference position P0 is preferably in a range of 85° to 95° that is supposed to provide comfort to a driver in view of ergonomics or in the vicinity thereof.

Thus, owing to that the accelerator pedal 4 is swung in a direction opposite to the step-on direction from the reference position P0 during automatic driving, the driver can easily recognize and acknowledge that the vehicle is travelling with automatic driving. Further, as described above, owing to that the swing position of the accelerator pedal 4 serving as a footrest is set in two steps in accordance with a travelling speed of the vehicle, the driver can recognize approximate travelling speed during automatic driving.

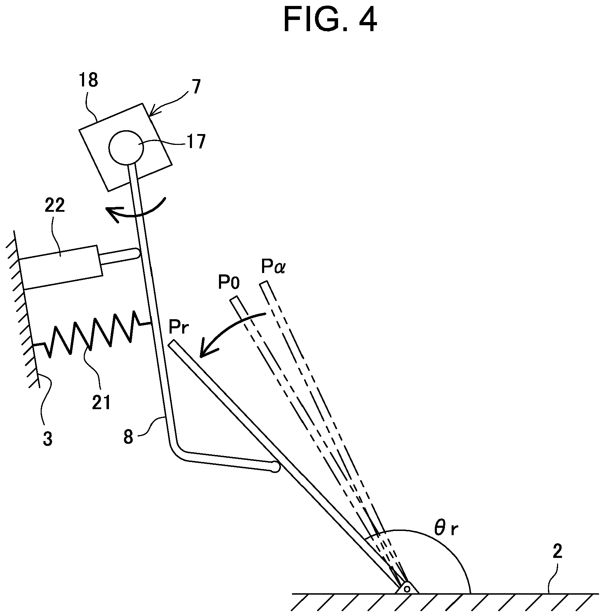

The automatic driving mode provided by the automatic driving system 32 can be released with an intentional operation of the driver. In the present embodiment, it is to step-on the accelerator pedal 4 at the first swing position Pα or the second swing position Pβ during automatic driving with a tread force being larger than the additional reaction force to a predetermined release position Pr illustrated in FIG. 4 beyond the reference position P0. Here, a release angle at the release position Pr formed between the step-on face 12 of the accelerator pedal 4 and the floor face 34 is denoted by θr.

The accelerator pedal operation amount sensor 17 detects the release operation of the accelerator pedal 4 as rotation of the accelerator arm 8 and outputs to the accelerator pedal operation amount detecting portion 27 of the accelerator pedal control unit 26. When the step-on operation of the accelerator pedal 4 beyond the release angle θr continues for a predetermined time period, the accelerator pedal control unit 26 determines that the step-on operation is the intentional release operation by the driver. Then, the accelerator pedal control unit 26 notifies the release operation to the driving mode switching control portion of the automatic driving system 32.

The driving mode switching control portion that has received the notification instructs the accelerator pedal control unit 26 and the engine control unit 30 to perform switching from the automatic driving mode to the manual driving mode. The accelerator pedal control unit 26 that has received the switching instruction causes the additional reaction force control portion 29 to control the second reaction force applying unit 22 to return the operation rod 24 from the extension position in FIG. 3A or 3B to the original position. According to the above, since the additional reaction force is eliminated, the accelerator pedal 4 is released from the state of serving as a footrest.

Concurrently, the accelerator pedal control unit 26 obtains, from the engine control unit 30, a throttle opening at the time when the switching instruction into the manual driving mode is received from the automatic driving system 32. Based on the throttle opening, the accelerator pedal control unit 26 calculates a step-on amount of the accelerator pedal 4 corresponding thereto, that is, a rotation position of the accelerator arm 8. Based on the calculation result, the accelerator pedal actuator control portion 28 drives the accelerator pedal actuator 18 and moves the accelerator arm 8 to a rotation position corresponding to the throttle opening just before switching to manual driving.

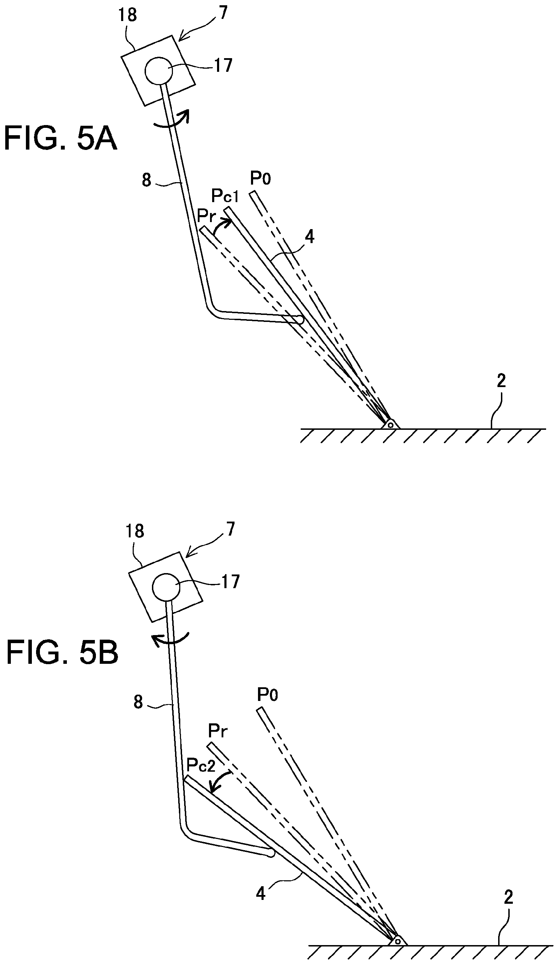

FIG. 5A illustrates a case that an operation amount of the accelerator pedal 4 corresponding to a throttle opening just before switching to manual driving is smaller than an operation amount corresponding to the release position Pr (or the step-on position of the accelerator pedal 4 during the release operation). Here, the accelerator pedal 4 is returned from the release position Pr to a driving switching position Pc1 on a side of the reference position P0.

FIG. 5B illustrates a case that the operation amount of the accelerator pedal 4 corresponding to a throttle opening just before switching to manual driving is larger than the operation amount corresponding to the release position Pr (or the step-on position of the accelerator pedal 4 during the release operation). Here, the accelerator pedal 4 is moved from the release position Pr to a driving switching position Pc2 on a side of the full-open position Pmax.

Movement of the accelerator pedal 4 to the driving switching position Pc1 or Pc2 is detected by the accelerator pedal operation amount detecting portion 27 via the accelerator pedal operation amount sensor 17 and outputs to the engine control unit 30. Being informed of the movement of the accelerator pedal 4 to the driving switching position, the engine control unit 30 that has been instructed by the automatic driving system 32 to perform switching to manual driving switches the control of the electronic control throttle 31 from the automatic driving mode based on instructions of the automatic driving system 32 to the manual driving mode corresponding to operation amounts of the accelerator pedal 4.

Accordingly, the driver can start operating of the accelerator pedal 4 at a position corresponding to a travelling state just before switching to manual driving, and thus, switching from automatic driving to manual driving can be performed without causing a feeling of strangeness. In particular, in a case that a step-on amount of the accelerator pedal 4 at the time of the release operation is extremely different from a throttle opening just before switching to manual driving, it is possible to eliminate a fear that the switching to manual driving causes rapid acceleration or rapid deceleration of the vehicle. Thus, safer travelling of the vehicle can be ensured.

Further, according to the present embodiment, it is possible to provide a switch function to the accelerator pedal 4 that serves as a footrest during automatic driving. The switch function is provided due to the step-on operation from the first swing position Pα or the second swing position Pβ to the reference position P0, the step-on operation from the second swing position Pβ to the first swing position Pα, and/or the step-on operation from the first swing position Pα to the reference position P0.

In this case, the additional reaction force applied to the accelerator pedal 4 by the second reaction force applying unit 22 in the case of stepping-on from the first and second swing positions Pα, Pβ toward the reference position P0 is set smaller to some extent than that in the case of stepping-on from the reference position P0 in the step-on direction. Further, the additional reaction force in the case of stepping-on from the second swing position Pβ to the first swing position Pα is set smaller than that in the case of stepping-on from the first swing position Pα to the reference position P0. According to the above, it is possible to provide stepwise click feeling to the step-on operations.

It is preferable that the switch function provided to the accelerator pedal 4 serving as a footrest is similar to a switch arranged, for example, at a steering wheel. Examples of the switch include setting and adjusting of constant travelling speed during ACC travelling and operations for audio instrument and air-conditioning instrument.

According to the above, in the case that the vehicle is travelling with automatic driving at Level 3, the driver can perform switch operations without directly touching a steering wheel that has been automatically controlled. In the case that the vehicle is travelling with automatic driving at Level 2, the driver can concentrate on operations of the steering wheel.

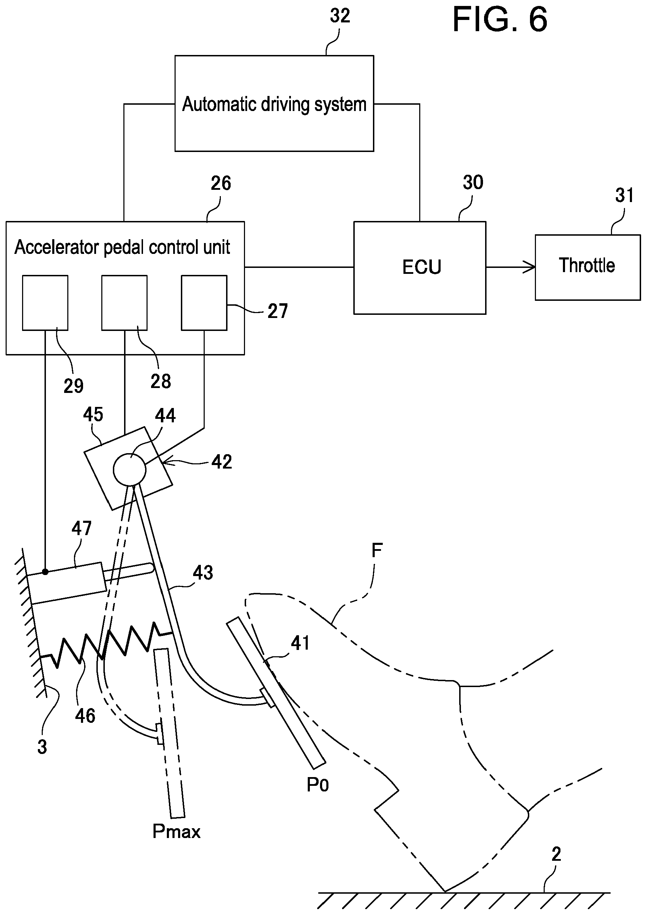

The vehicular accelerator pedal device according to the present invention can be applied similarly to an accelerator pedal having a different structure from that illustrated in FIG. 1. Another embodiment illustrated in FIG. 6 is different from the embodiment illustrated in FIG. 1 in that an accelerator pedal 41 is a so-called suspended type.

The accelerator pedal 41 is suspended as being spaced from the floor panel 2 with a lower end of an accelerator arm 43 that extends from an accelerator pedal device 42 in the engine room attached to a back face thereof. The accelerator pedal device 42 is provided with an accelerator pedal operation amount sensor 44 for detecting a rotation amount of the accelerator arm 43 as an operation amount of the accelerator pedal 41. Further, the accelerator pedal device 42 is provided with an accelerator pedal actuator 45 being, for example, an electric motor for rotating the accelerator arm 43 in the vehicle front-rear direction to a desired angle position with the base end part being as the rotation center.

A first reaction force applying unit 46 and a second reaction force applying unit 47 are arranged at the accelerator arm 43 between the accelerator arm 43 and the dash-panel 3 or another vehicle body portion. Configurations and functions of the first reaction force applying unit 46 and the second reaction force applying unit 47 are the same as the first reaction force applying unit 21 and the second reaction force applying unit 22 in FIG. 2, and description thereof is not repeated. Further, the accelerator pedal device 42 and the second reaction force applying unit 47 are connected to the accelerator pedal control unit 26 in the same manner as illustrated in FIG. 2.

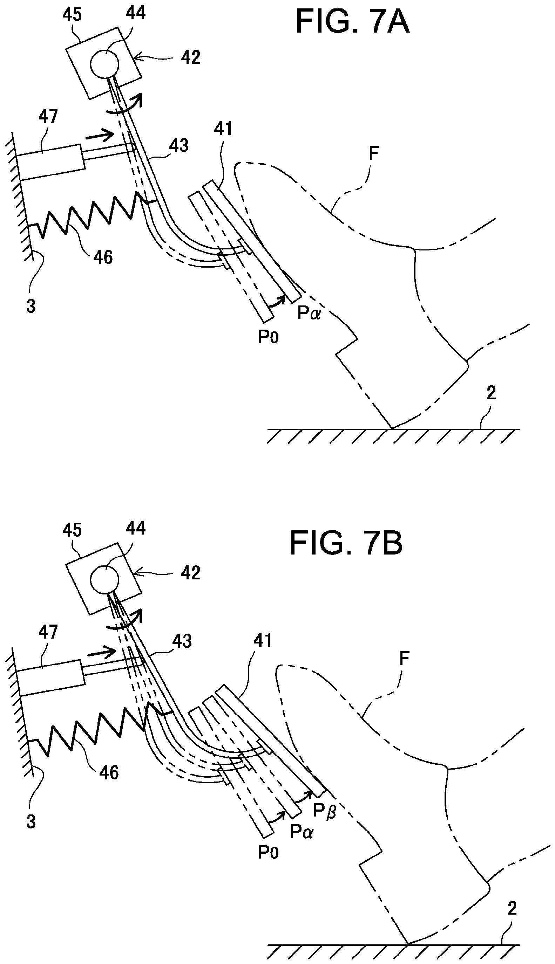

FIGs. 7A and 7B illustrate the accelerator pedal 41 serving as a footrest in the embodiment in FIG. 6, the accelerator pedal 41 being moved to swing beyond the reference position P0 in a direction opposite to the step-on direction by the second reaction force applying unit 47 during automatic driving. Similarly to the accelerator pedal 4 in FIG. 2, the accelerator pedal 41 is set to swing in two steps to the first swing position Pα illustrated by solid lines in FIG. 7A and the second swing position Pβ illustrated by solid lines in FIG. 7B in accordance with a travelling speed of the vehicle with automatic driving.

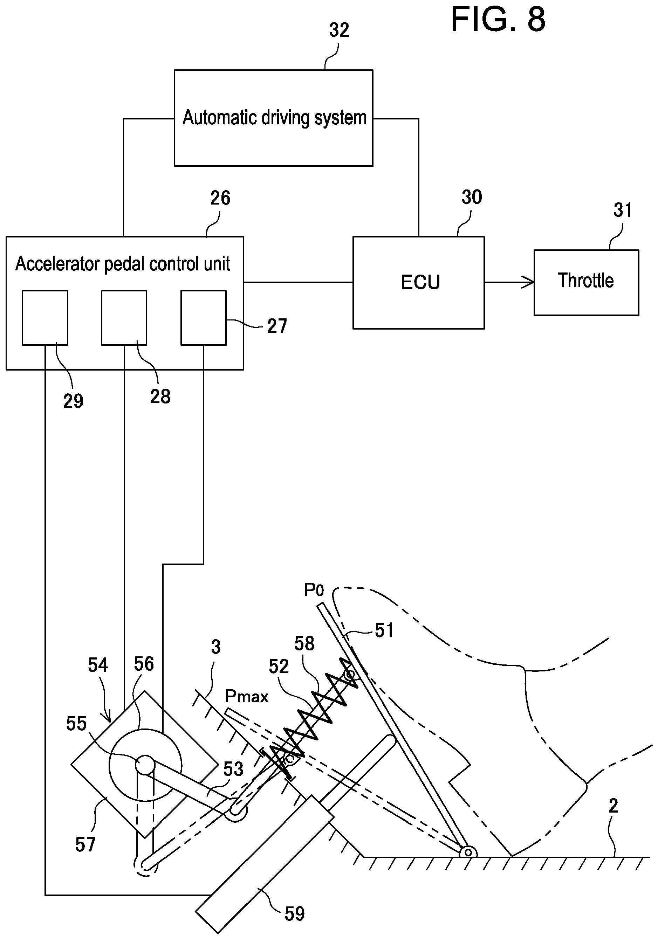

In another embodiment illustrated in FIG.8, an accelerator pedal 51 is an organ type being the same as that in the embodiment in FIG. 1. Here, the accelerator pedal 51 is different from the accelerator pedal 4 in FIG. 1 in that a back face thereof is attached to a leading end of an accelerator rod 52 extending from the dash-panel 3 to the vehicle rear side in a direction opposite to the step-on direction.

A base end of the accelerator rod 52 is connected to a rotation shaft 55 of an accelerator pedal device 54 via a link 53. An accelerator pedal operation amount sensor 56 is arranged at the rotation shaft 55 for detecting a rotation amount thereof as an operation amount of the accelerator pedal 51. Further, the accelerator pedal device 54 is provided with an accelerator pedal actuator 57 being, for example, an electric motor to rotationally move the rotation shaft 55 causing the accelerator rod 52 to extend and contract from the dash-panel 3 so that the accelerator pedal 51 is rotated in the vehicle front-rear direction to a desired angle position with the base end part being as the rotation center.

A first reaction force applying unit 58 being a spring that generates normal reaction force to the accelerator pedal 51 in a direction opposite to the step-on direction is arranged at the accelerator rod 52 between the dash-panel 3 and the accelerator pedal 51. A second reaction force applying unit 59 is arranged between the accelerator pedal 51 and a vehicle body portion. Configurations and functions of the second reaction force applying unit 59 is the same as the first reaction force applying unit 21 in FIG. 2, and description thereof is not repeated. Further, the accelerator pedal device 54 and the second reaction force applying unit 59 are connected to the accelerator pedal control unit 26 in the same manner as illustrated in FIG. 2.

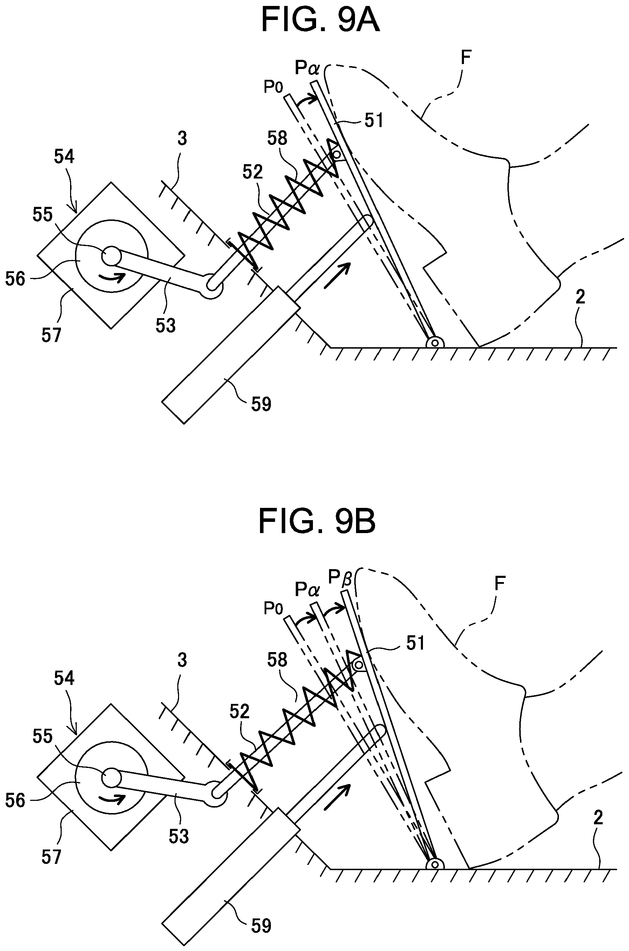

FIGs. 9A and 9B illustrate the accelerator pedal 51 serving as a footrest in the embodiment in FIG. 8, the accelerator pedal 51 being moved to swing beyond the reference position P0 in a direction opposite to the step-on direction by the second reaction force applying unit 59 during automatic driving. Similarly to the accelerator pedal 4 in FIG. 2, the accelerator pedal 51 is set to swing in two steps to the first swing position Pα illustrated by solid lines in FIG. 9A and the second swing position Pβ illustrated by solid lines in FIG. 9B in accordance with a travelling speed of the vehicle with automatic driving.

In the embodiments in FIGs. 6 and 8, similarly to the embodiment in FIG. 1, releasing of automatic driving by the driver is performed by stepping on the accelerator pedal 41, 51 serving as a footrest against the additional reaction force due to the second reaction force applying unit 46, 59 beyond the reference position to the predetermined release position continuously for a predetermined time period. As described above with reference to FIGs. 5A and 5B in the embodiment in FIG. 1, when the switching instruction into the manual driving mode is received from the automatic driving system 32, the accelerator pedal control unit 26 controls the second reaction force applying unit 46, 59 to eliminate the additional reaction force.

Concurrently, the accelerator pedal control unit 26 controls the accelerator pedal actuator 44, 57 to move the accelerator pedal 41, 51 to a step-on position corresponding to a throttle opening just before switching to manual driving. Accordingly, the driver can start operating of the accelerator pedal 41, 51 at a position corresponding to a travelling state just before switching to manual driving, and thus, switching from automatic driving to manual driving can be performed without causing a feeling of strangeness.

In the above, description is provided in detail on preferable embodiments of the present invention. Here, not limited thereto, the present invention may be actualized with a variety of modifications within the technical scope thereof. For example, intentional releasing of automatic driving by a driver can be performed by operating a release button arranged at a steering wheel of a vehicle, in a vicinity thereof, or on a dash-board.

### EXPLANATION OF REFERENCES

- 4, 41, 51: Accelerator pedal
- 7, 42, 54: Accelerator pedal device
- 8, 43: Accelerator arm
- 17, 44, 56: Accelerator pedal operation amount sensor
- 18, 45, 57: Accelerator pedal actuator
- 21, 46, 58: First reaction force applying unit
- 22, 47, 59: Second reaction force applying unit
- 26: Accelerator pedal control unit
- 30: Engine control unit (ECU)
- 52: Accelerator rod

## Claims

1. A vehicular accelerator pedal device, comprising:
an accelerator pedal;
an accelerator pedal actuator configured to move the accelerator pedal to a desired operation position; and
an accelerator pedal control unit configured to control the accelerator pedal actuator so that the accelerator pedal is moved, upon switching from automatic driving to manual driving, to an operation position corresponding to a throttle opening just before switching to the manual driving.

2. The vehicular accelerator pedal device according to claim 1, further comprising a reaction force applying unit configured to apply, during the automatic driving, an additional reaction force to the accelerator pedal in a direction opposite to a step-on direction to keep the accelerator pedal at a predetermined position.

3. The vehicular accelerator pedal device according to claim 2, wherein, during the automatic driving, the predetermined position of the accelerator pedal is set at a position on an opposite side to the step-on direction beyond a reference position without being stepped on with the manual driving.

4. The vehicular accelerator pedal device according to any one of claims 1 to 3, wherein the automatic driving is capable of being released by the accelerator pedal being stepped on against the additional reaction force from the predetermined position.
